# EUROPÄISCHE PATENTSCHRIFT

(11) **EP 1 433 628 B1**
(45) Veröffentlichungstag und Bekanntmachung des Hinweises auf die Patenterteilung: **02.07.2008**
(21) Anmeldenummer: 04006181.4
(22) Anmeldetag: 12.04.2002
(51) Int. Cl.: B60D 1/46, B60D 1/52

(54) **Anhängerkupplung eines Ackerschleppers**
Trailer hitch of an agricultural tractor
Attelage de remorque de tracteur agricole

(30) Priorität: 18.04.2001 DE 10118862
(43) Veröffentlichungstag der Anmeldung: 30.06.2004
(62) Teilanmeldung aus: 02008367.1
(73) Patentinhaber: DEERE & COMPANY, Moline, Illinois 61265-8098 (US)
(72) Erfinder: Zahn, Werner, 67454 Hassloch (DE)
(74) Vertreter: Magin, Ludwig Bernhard

(56) Entgegenhaltungen:
- EP-A- 0 843 956
- EP-A- 0 876 929
- US-A- 2 850 293
- US-A- 3 664 686
- US-A- 3 708 183

## Beschreibung

Die Erfindung betrifft eine Anhängerkupplung gemäß dem Oberbegriff des Patentanspruchs 1.

Aus der AT 406 849 B ist eine solche Kupplungsvorrichtung zwischen einem Zugfahrzeug, insbesondere einem Ackerschlepper, und einem Anhänger bekannt. Diese Kupplungsvorrichtung wird von zwei Wangen gebildet, die heckseitig am Ackerschlepper gehalten sind. Zwischen diesen Wangen ist ein Kupplungsglied in Form eines Kupplungsmauls mit zurückziehbarem Kupplungsbolzen höhenverstellbar gehalten. Am unteren Ende ist an die Wangen eine horizontale Platte angeschweißt, an der ein Kupplungsglied in Form eines Kugelkopfes befestigt ist. Soll das Kupplungsglied gewechselt werden, so muß die gesamte Kupplungsvorrichtung einschließlich der schweren Wangen und der Platte vom Ackerschlepper abgebaut werden, was aufgrund der großen Masse dieser Teile relativ aufwendig ist.

Die US-A-3 708 183 offenbart eine Anhängerkupplung für ein Zugfahrzeug zum Anhängen eines Anhängers, insbesondere eines Wohnwagens. Die Anhängerkupplung weist ein verschiebbares Kupplungsteil auf, welches an einer vertikal verschiebbaren Platte gehalten ist und über einen Steckbolzen an einer vertikal federnd aufgehängten Verbindungsplatte höhenverstellbar arretierbar ist. Eine derartige Anhängekupplung ist nur für leichtere Lasten ausgelegt und weist eine für das Betreiben eines landwirtschaftlichen Anhängegerätes erforderliche Stabilität bzw. Robustheit nicht auf. Ferner weist die offenbarte Anhängerkupplung einen aufwändigen Aufbau mit hoher Teilevielfalt auf, der sie für den Einsatz in der Landwirtschaft ungeeignet erscheinen lässt.

Der Erfindung liegt die Aufgabe zugrunde, eine Anhängerkupplung der eingangs genannten Art zu schaffen, die ein einfaches Austauschen des Kupplungsglieds ermöglicht. Zusätzlich soll die Anhängerkupplung robust und zuverlässig sein.

Diese Aufgabe wird erfindungsgemäß mit den Merkmalen des Patentanspruchs 1 gelöst.

Die Anhängerkupplung gemäß Anspruch 1 weist zwei vertikale Wangen auf, die im wesentlichen eine Abstützfunktion besitzen. Diese Wangen weisen vorzugsweise im unteren Endbereich einander zugewandte, horizontale Führungsnuten auf, in die eine Platte einschiebbar ist. Diese Platte trägt ein Kupplungsglied, das die Verbindung zu einem Anhänger herstellt. Als Kupplungsglied ist insbesondere an einen Kugelkopf bzw. einen Piton gedacht. Das Kupplungsglied ist vorzugsweise unlösbar mit der Platte verbunden, so daß die auf den Anhänger ausgeübte Zugkraft verschleißfrei vom Kupplungsglied auf die Platte übertragen wird. Um eine sichere Kraftübertragung zwischen den Wangen und der darin verschiebbar gehaltenen Platte zu gewährleisten, ist die Platte durch mindestens einen Steckbolzen gegenüber der Wange arretierbar. Dieser Steckbolzen ist ausreichend groß dimensioniert, um die Zugkraft vom Fahrzeug auf den Anhänger übertragen zu können. Um eine gute, formschlüssige Abstützung des Steckbolzens in der Wange zu erzielen, ist es günstig, diesen in einer vertikalen Führungsnut oder Bohrung zu halten. Die Platte weist vorzugsweise eine Bohrung oder seitliche Einbuchtung auf, in die der Steckbolzen formschlüssig eingreift.

Insbesondere bei landwirtschaftlichen Fahrzeugen kommt es häufig vor, daß beim Befahren unebener Feldwege erhebliche Stöße auf das Fahrzeug und damit auch auf die Anhängerkupplung ausgeübt werden. Um auch unter rauhen Betriebsbedingungen ein sicheres Halten des Steckbolzens in einer die Platte arretierenden Lage zu gewährleisten, ist es vorteilhaft, den Steckbolzen durch einen Sicherungsstift zu sichern. Dieser Sicherungsstift durchsetzt eine Querbohrung des Bolzens, die in der Arretierlage des Steckbolzens mit einer entsprechenden horizontalen Bohrung der Wange fluchtet. Der Sicherungsstift greift dabei in diese horizontale Bohrung der Wange ein, so daß ein ungewolltes Verschieben des Steckbolzens ausgeschlossen ist.

Grundsätzlich kann der Steckbolzen einen beliebig geformten Querschnitt aufweisen, so lange er in der Lage ist, die im Betrieb auftretenden Schub- und Zugkräfte zu übertragen. Dringt der Steckbolzen in eine vertikale Bohrung der Wange ein, so ist ein kreisförmiger Querschnitt des Steckbolzens vorzuziehen, um eine optimale Anpassung des Steckbolzens an die Bohrung zu erzielen. Wird der Steckbolzen dagegen in einer Führungsnut der Wange gehalten, so ist ein rechteckförmiger Querschnitt des Steckbolzens vorzuziehen.

Der Erfindungsgegenstand wird beispielhaft anhand der Zeichnung erläutert, ohne den Schutzumfang zu beschränken.

Es zeigt:
- Figur 1: eine räumliche Darstellung einer Anhängerkupplung,
- Figur 2: eine Schnittdarstellung durch die Anhängerkupplung gemäß Figur 1 entlang der Schnittlinie II-II,
- Figur 3: eine zugeordnete Schnittdarstellung durch die Anhängerkupplung entlang der Schnittlinie III-III,
- Figur 4: eine vergrößerte Ansicht der Oberflächenstrukturierung einer Leiste,
- Figur 5: eine Schnittdarstellung durch die Leiste gemäß Figur 4 entlang der Schnittlinie V-V,
- Figur 6: eine Schnittdarstellung gemäß Figur 2 einer ersten alternativen Ausführungsform und
- Figur 7: eine Schnittdarstellung gemäß Figur 3 einer zweiten alternativen Ausführungsform.

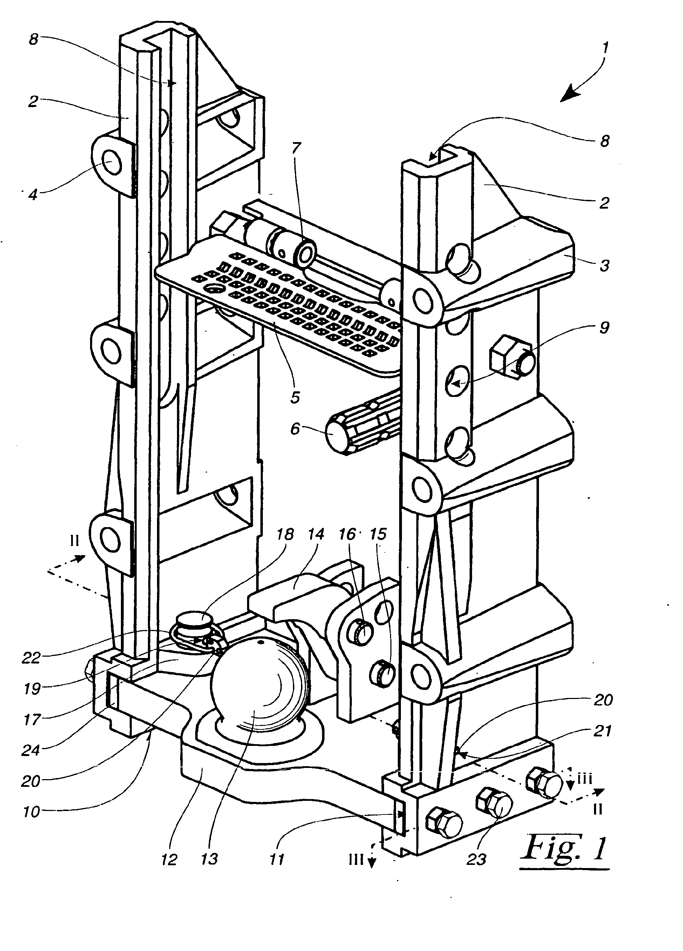

Figur 1 zeigt eine räumliche Darstellung einer Anhängerkupplung 1, die heckseitig an einem nicht dargestellten Fahrzeug, insbesondere an einem Ackerschlepper angebracht ist. Diese Anhängerkupplung 1 besteht aus zwei Wangen 2, die vertikal und zueinander parallel ausgerichtet sind. Diese Wangen 2 weisen jeweils drei Befestigungslaschen 3 auf, die von Durchgangsbohrungen 4 durchsetzt sind. Diese Durchgangsbohrungen 4 dienen zur Aufnahme von nicht dargestellten Haltemitteln, die die Wangen 2 am Fahrzeugheck festlegen.

Die beiden Wangen 2 werden innenseitig von einer Schutzabdeckung 5 übergriffen, die eine Zapfwelle 6 des Fahrzeugs oberseitig überdeckt. Diese Schutzabdeckung 5 ist über ein Rastgelenk 7 an den Wangen 2 abgestützt, um den Schwenkwinkel der Schutzabdeckung 5 den jeweiligen Bedürfnissen anpassen zu können.

In die Wangen 2 ist jeweils eine vertikale Führungsnut 8 eingeformt, die zur Aufnahme einer nicht dargestellten, höhenverstellbaren Kupplungsvorrichtung dient. Zur Arretierung dieser Kupplungsvorrichtung weisen die Wangen 2 im Bereich der vertikalen Führungsnut 8 Bohrungen 9 auf, in die Rastbolzen der Kupplungsvorrichtung zu deren Arretierung in unterschiedlichen Höhenlagen eingreifen können.

Im Bereich des unteren Endes 10 der Wangen 2 sind an diesen horizontale Führungsnuten 11 angeformt, die zur Aufnahme einer horizontalen Platte 12 dienen. Auf dieser Platte 12 ist ein Kupplungsglied 13 in Form einer Kugelkopfkupplung gehalten. Alternativ könnte als Kupplungsglied 13 auch ein Piton angebracht sein. Dieser besitzt im Gegensatz zur Kugelkopfkupplung eine zylindrische Form.

Auf der Platte 12 ist außerdem ein Sperrhebel 14 um eine Achse 15 verschwenkbar abgestützt. Dieser Sperrhebel 14 drückt eine nicht dargestellte Kuppelöse von oben gegen das Kupplungsglied 13, um ein Lösen der Verbindung zum Anhänger während der Fahrt zu verhindern. Um den Sperrhebel 14 in der dargestellten Sperrlage zu halten, ist dieser mittels eines Sperrbolzens 16 arretierbar.

Im Betrieb kommt es vor, daß die Kugelkopfkupplung 13 beispielsweise durch einen Piton ersetzt werden muß. In diesem Fall würde es nicht ausreichen, lediglich das Kupplungsglied 13 zu ersetzen, da auch der Sperrhebel 14 an das neue Kupplungsglied 13 angepaßt werden muß. Es ist daher vorgesehen, die Platte 12 in die horizontalen Führungsnuten 11 der Wangen 2 einschiebbar auszubilden. Damit kann der Kupplungsaufbau, bestehend aus der Platte 12, dem Kupplungsglied 13 und dem Sperrhebel 14, einfach ausgewechselt werden, ohne die schweren Wangen 2 vom Fahrzeugheck demontieren zu müssen.

Um bei der Übertragung der Zugkräfte ein Herausziehen der Platte 2 aus den horizontalen Führungsnuten 11 zu verhindern, weisen die Wangen 2 beidseits der Führungsnuten 11 Laschen 17 auf, die von Steckbolzen 18 durchdrungen sind. Jeder Steckbolzen 18 besitzt eine horizontale Bohrung 19, in die ein Sicherungsstift 20 einsteckbar ist. Dieser Sicherungsstift 20 durchdringt eine horizontale Bohrung 21 der Wange 2, so daß der Sicherungsstift 20 den Steckbolzen 18 in einer die Platte 12 festlegenden Lage arretiert. Der Sicherungsstift 20 weist außerdem einen federnden Bügel 22 auf, der den Steckbolzen 18 umgreift und damit ein versehentliches Herausziehen des Sicherungsstiftes 20 aus den Bohrungen 19, 21 verhindert.

Die Steckbolzen 18 sind in entsprechenden Bohrungen der Lasche 17 sowie der Platte 12 mit Spiel einschiebbar, um ein leichtgängiges Einstecken des Steckbolzens 19 zu ermöglichen. Aufgrund des vorgenannten Spiels, das der Steckbolzen 18 in den Bohrungen der Lasche 17 bzw. der Platte 12 besitzt, könnten beim Anfahren bzw. Bremsen des Fahrzeugs Stöße auf den Steckbolzen 18 übertragen werden. Dies würde zu einem erhöhten Verschleiß des Steckbolzen 18 sowie der Lasche 17 führen. Zur Vermeidung dieses erhöhten Verschleißes sind die Wangen 2 im Bereich der horizontalen Führungsnut 11 durchbohrt und von Schrauben 23 durchdrungen. Diese Schrauben 23 drücken eine in die Führungsnut 11 eingelegte Leiste 24 stirnseitig gegen die Platte 12, so daß diese gegen die Steckbolzen 18 verspannt wird.

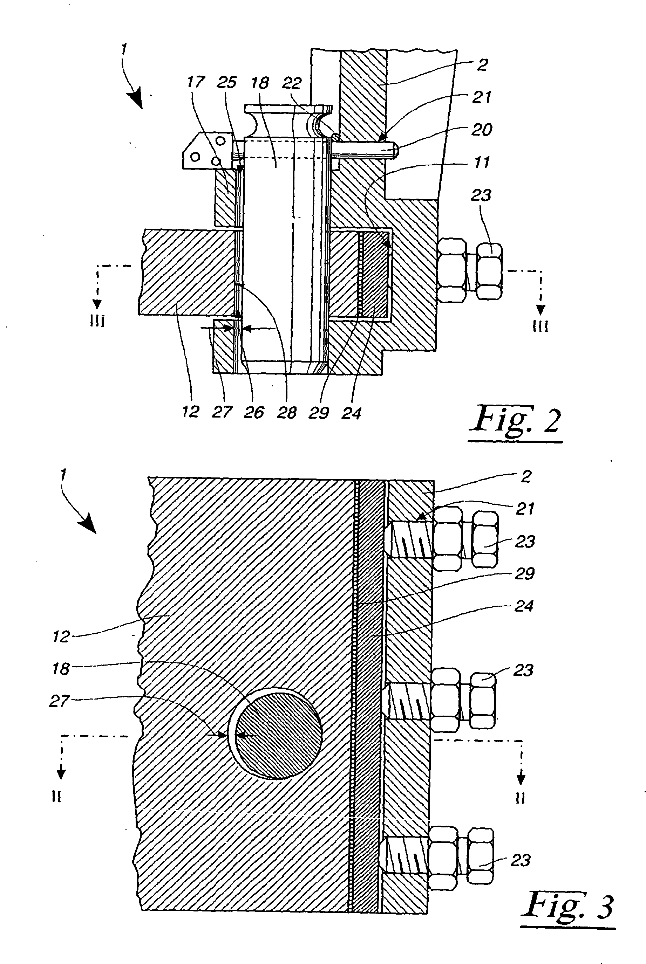

Figur 2 zeigt eine Schnittdarstellung durch die Anhängerkupplung 1 gemäß Figur 1 entlang der Schnittlinie II-II. Aus dieser Darstellung ist insbesondere die Bohrung 21 der Wange 2 zur Aufnahme des Sicherungsstiftes 20 zu ersehen.

Der Steckbolzen 18 durchdringt eine Bohrung 25 der Lasche 17 sowie eine weitere Bohrung 26 der Platte 12. Ein Spiel 27 des Steckbolzens 18 in der Bohrung 26 ist in Figur 2 übertrieben dargestellt, um es besser erkennen zu können.

Die Schrauben 23 drücken die Leiste 24 stirnseitig gegen die Platte 12, so daß eine einseitige Anlage des Steckbolzens 18 an einer Innenwandung 28 der Bohrung 26 gegeben ist. Damit wird die Wirkung des Spiels 27 ausgeschaltet, so daß keine Stöße zwischen dem Steckbolzen 18 und der Platte 12 sowie der Lasche 17 auftreten. Zusätzlich weist die Leiste 24 eine zur Platte 12 gerichtete Profilierung 29 auf, die später näher erläutert wird.

Figur 3 zeigt eine zugeordnete Schnittdarstellung durch die Anhängerkupplung 1 gemäß Figur 2 entlang der Schnittlinie III-III. Aus dieser Darstellung ist insbesondere zu ersehen, daß die Schrauben 23 stumpf gegen die Leiste 24 drücken. Zur Erzielung eines guten Halts der Platte 12 an der Leiste 24 ist letztere profiliert.

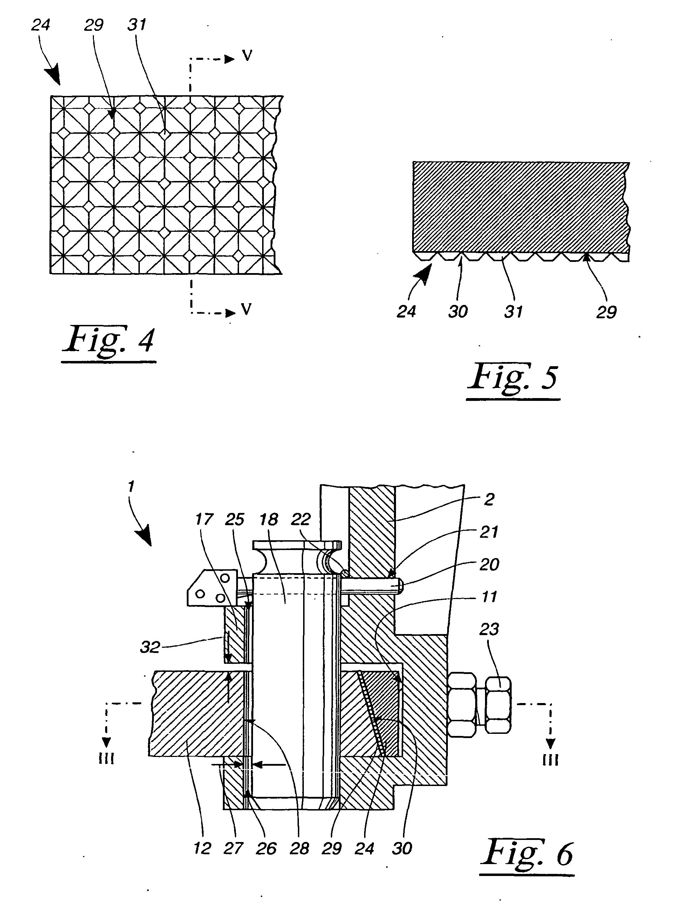

Die Profilierung 29 der Leiste 24 ist insbesondere aus den zugeordneten Darstellungen gemäß den Figuren 4 und 5 zu ersehen. Aus der der Platte 12 zugewandten Oberfläche 30 der Leiste 24 ragen Pyramidenstümpfe 31 hervor, deren Höhe zwischen 1 mm und 2 mm, vorzugsweise 1,5 mm, beträgt. Die Pyramidenstümpfe 31 besitzen einen quadratischen Grundriß, was insbesondere aus Figur 4 zu ersehen ist.

Alternativ wäre es auch vorstellbar, die Profilierung 29 statt auf der Leiste 24 auf der Platte 12 vorzusehen.

Figur 6 zeigt eine Schnittdarstellung gemäß Figur 2 einer alternativen Ausführungsform der Anhängerkupplung 1, wobei gleiche Bezugszeichen gleiche Teile benennen. Bei dieser Ausführungsform ist die Leiste 24 keilförmig ausgebildet, wobei die Platte 12 einen hierzu passenden trapezförmigen Querschnitt aufweist. Beim Festziehen der Schrauben 23 ergibt sich neben der gewünschten Ausschaltung des Spiels 27 des Steckbolzens 18 eine zusätzliche, nach unten gerichtete Kraft auf die Platte 12. Aufgrund dieser Kraft wird auch ein vertikales Spiel 32 der Platte 12 in der horizontalen Führungsnut 11 ausgeschaltet. Die Platte 12 ist demnach in allen Richtungen spielfrei in den Führungsnuten 11 der Wangen 2 gehalten.

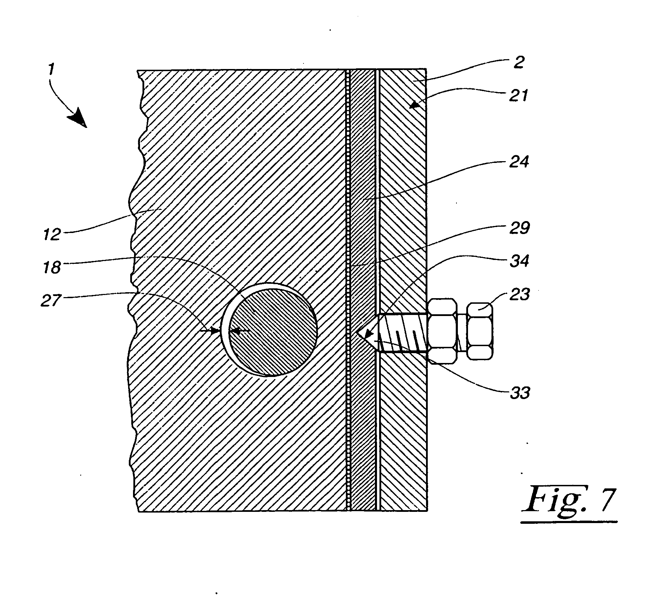

Figur 7 zeigt eine weitere alternative Ausführungsform der Anhängerkupplung 1 gemäß Figur 3, wobei gleiche Bezugszeichen wiederum gleiche Teile benennen. Im Unterschied zum Ausführungsbeispiel gemäß Figur 3 ist die Wange 2 von nur einer Schraube 23 durchdrungen, die fluchtend auf den Steckbolzen 18 ausgerichtet ist. Die Schraube 23 besitzt einen kegelförmigen Endbereich 33, der in eine entsprechend konisch geformte Ausnehmung 34 der Leiste 24 eindringt. Durch das Zusammenwirken des kegelförmigen Endbereichs 33 mit der konischen Ausnehmung 34 ergibt sich eine ausreichend sichere Zentrierwirkung der Platte 12, so daß eine einzige Schraube 23 zur Ausschaltung des Spiels 27 ausreicht.

### Bezugszeichenliste

- 1: Anhängerkupplung
- 2: Wange
- 3: Befestigungslasche
- 4: Durchgangsbohrung
- 5: Schutzabdeckung
- 6: Zapfwelle
- 7: Rastgelenk
- 8: vertikale Führungsnut
- 9: Bohrung
- 10: unteres Ende der Wange
- 11: horizontale Führungsnut
- 12: Platte
- 13: Kupplungsglied
- 14: Sperrhebel
- 15: Achse
- 16: Sperrbolzen
- 17: Lasche
- 18: Steckbolzen
- 19: horizontale Bohrung des Steckbolzens
- 20: Sicherungsstift
- 21: horizontale Bohrung der Wange
- 22: federnder Bügel
- 23: Schraube
- 24: Leiste
- 25: Bohrung der Lasche
- 26: Bohrung der Platte
- 27: horizontales Spiel
- 28: Innenwandung der Bohrung
- 29: Profilierung
- 30: Oberfläche der Leiste
- 31: Pyramidenstumpf
- 32: vertikales Spiel
- 33: kegelförmiger Endbereich
- 34: Ausnehmung

## Patentansprüche

1. Anhängerkupplung eines Ackerschleppers, wobei die Anhängerkupplung (1) zwei vertikal ausgerichtete Wangen (2) aufweist, die am Fahrzeugheck angebracht sind und an denen eine horizontal angeordnete Platte (12) gehalten ist, welche ein Kupplungsglied (13) trägt, **dadurch gekennzeichnet, dass** die Platte (12) lösbar in einander zugewandten, horizontalen Führungsnuten (11) der Wangen (2) einschiebbar und durch mindestens einen Steckbolzen (18) an jeder Wange (2) arretierbar ist, wobei die Wangen (2) vertikale Führungsnuten (8) zur Höhenverstellung einer darin (8) aufnehmbaren Kupplungsvorrichtung und die Platte (12) Bohrungen (25) aufweisen, in die (25) die Steckbolzen (18) formschlüssig eingreifen.

2. Anhängerkupplung nach Anspruch 1, **dadurch gekennzeichnet, dass** der Steckbolzen (18) von mindestens einer Querbohrung (19) durchsetzt ist, die in einer die Platte (12) arretierenden Lage mit einer horizontalen Bohrung (21) der Wange (2) fluchtet, wobei die Querbohrung (21) von einem Sicherungsstift (20) durchsetzbar ist, der zur Sicherung des Steckbolzens (18) in die horizontale Bohrung (21) der Wange (2) eingreift.

3. Anhängerkupplung nach einem der Ansprüche 1 oder 2, **dadurch gekennzeichnet, dass** der Steckbolzen (18) einen rechteck- oder kreisförmigen Querschnitt aufweist.

## Claims

1. Trailer hitch of an agricultural tractor, wherein the trailer hitch (1) has two vertically oriented cheeks (2) which are attached to the vehicle rear and on which is held a horizontally arranged plate (12) which bears a hitch element (13), **characterized in that** the plate (12) can be pushed releasably into mutually facing, horizontal guide grooves (11) of the cheeks (2) and can be locked to each cheek (2) by means of at least one plug-in bolt (18), with the plate (12) and the cheeks (2) having vertical bores (25, 26) in which the plug-in bolts (18) engage in a form-fitting manner.

2. Trailer hitch according to Claim 1, **characterized in that** the plug-in bolt (18) is penetrated by at least one transverse bore (19) which, in a position locking the plate (12), is aligned with a horizontal bore (21) in the cheek (2), with it being possible for the transverse bore (21) to be penetrated by a securing pin (20) which engages in the horizontal bore (21) in the cheek (2) in order to secure the plug-in bolt (18).

3. Trailer hitch according to either of Claims 1 and 2, **characterized in that** the plug-in bolt (18) has a rectangular or circular cross section.

## Revendications

1. Attelage de remorque d'un tracteur agricole, l'attelage de remorque (1) comportant deux joues (2) orientées verticalement, lesquelles sont attachées à l'arrière du véhicule et contre lesquelles est maintenue une plaque (12) disposée horizontalement et portant un élément d'attelage (13), **caractérisé en ce que** la plaque (12) peut être insérée de manière amovible dans des rainures de guidage (11) horizontales, orientées l'une vers l'autre, et peut être bloquée par au moins un boulon à enficher (18) sur chaque joue (2), la plaque (12) et les joues (2) comportant des forures (25, 26) verticales, dans lesquelles les boulons à enficher (18) s'engagent par conjugaison de forme.

2. Attelage de remorque selon la revendication 1, **caractérisé en ce que** le boulon à enficher (18) est traversé par au moins une forure transversale (19) qui, dans une position bloquant la plaque (12), est alignée avec une forure horizontale (21) ménagée dans la joue (2), la forure transversale (19) étant traversée par un tenon de blocage (20), qui s'engage dans la forure horizontale (21) de la joue (2) en vue de bloquer le boulon à enficher (18).

3. Attelage de remorque selon la revendication 1 ou 2, **caractérisé en ce que** le boulon à enficher (18) a une section rectangulaire ou circulaire.
